# EUROPEAN PATENT APPLICATION

(11) **EP 1 331 510 A1**
(43) Date of publication of application: **30.07.2003**
(21) Application number: 01976691.4
(22) Date of filing: 16.10.2001
(51) Int. Cl.: G02F 1/1337

(54) **ALIGNING AGENT FOR LIQUID CRYSTAL FOR IN-PLANE SWITCHING, LIQUID-CRYSTAL ALIGNMENT FILM, AND LIQUID-CRYSTAL DISPLAY ELEMENT**

(30) Priority: 16.10.2000 JP 2000315213
(71) Applicant: Nissan Chemical Industries, Ltd., Chiyoda-ku, Tokyo 101-0054 (JP)
(72) Inventor: MANO, Yuichi, c/o Nissan Chemical Ind., Ltd., Funabashi--shi, Chiba 274-8507 (JP); SANO, Syunichi, c/o Nissan Chemical Ind., Ltd., Funabashi-shi, Chiba 274-85 (JP); ONO, Go, c/o Nissan Chemical Ind., Ltd., Funabashi-shi, Chiba 274-8507 (JP); KUROSAKI, Mariko, c/o Nissan Chemical Ind., Ltd., Funabashi-shi, Chiba 274-8507 (JP); ENDO, Hideyuki, c/o Nissan Chemical Ind., Ltd., Funabashi-shi, Chiba 274-8507 (JP)
(74) Representative: Hartz, Nikolai F., Dr.
(86) International application number: JP0109055
(87) International publication number: WO02033481

(57) **Abstract**

A treating agent for liquid crystal alignment which, when used for a liquid crystal display device operating in the in-plane switching mode, is excellent in printability and rubbing resistance and having little residual image or image persistence; a liquid crystal alignment film; and a liquid crystal display device of high display quality employing it.

The treating agent for liquid crystal alignment contains a unit structure of polyamic acid or polyimide having a tetravalent organic group constituting an aromatic tetracarboxylic acid and a unit structure of polyamic acid or polyimide having a tetravalent organic group constituting an alicyclic tetracarboxylic acid, at the same time. The liquid crystal alignment film is formed by coating the treating agent for liquid crystal alignment on a substrate, followed by baking and then by rubbing treatment. The in-plane switching liquid crystal display device is prepared by means of the liquid crystal alignment film.

## Description

### TECHNICAL FIELD

The present invention relates to a treating agent for liquid crystal alignment to be employed for a liquid crystal display device which is to be driven by applying an electric field in parallel with the substrate, a liquid crystal alignment film, and a liquid crystal display device employing it.

### BACKGROUND ART

In an in-plane switching system wherein electrodes are formed only on one side of a substrate and an electric field is applied in a direction parallel with the substrate, a liquid crystal display device is known to have a wide viewing angle characteristic and to be able to present a display of high quality, as compared with a conventional vertical electric field system wherein liquid crystal is driven by a voltage applied across electrodes formed on upper and lower substrates. A liquid crystal display device employing such an in-plane switching system, is disclosed, for example, in JP-A-5-505247.

A liquid crystal cell of such an in-plane switching system is excellent in the viewing angle characteristic, but it has had problems such that the electrode portions formed within the substrate are small, whereby a static charge is likely to be accumulated within the liquid crystal cell, and further, also by an application of an asymmetric voltage caused by driving, an electric charge is likely to be accumulated within the liquid crystal cell. Such accumulated electric charges are likely to disturb alignment of liquid crystal or to present an influence over the display as a residual image or image persistence, whereby the display quality of the liquid crystal device tends to be substantially deteriorated.

The residual image or image persistence phenomenon in the vertical electrical field system is proportional to the electric charge accumulated in the liquid crystal cell. However, the residual image phenomenon in the in-plane switching system varies not only simply by an influence of the voltage accumulated in the liquid crystal cell but also by the type of liquid crystal or the process condition for the preparation of the liquid crystal cell, and it is considered that not only the accumulated voltage, but also various factors are influential thereto. Further, such a residual image or image persistence phenomenon is influenced also by the type of the liquid crystal alignment film. Accordingly, a liquid crystal alignment film capable of reducing such a residual image or image persistence, is desired.

On the other hand, it is common to form a liquid crystal alignment film by printing an agent for liquid crystal alignment and drying and baking it, followed by rubbing treatment. However, a liquid crystal cell of an in-plane switching system has an electrode structure only on one side of a substrate, and irregularities of the substrate are substantial. Further, an insulator such as silicon nitride may also be formed on the substrate surface. Accordingly, a treating agent for liquid crystal alignment superior in printability to the conventional agent for alignment, is desired. Further, there has been a problem that as compared with a conventional liquid crystal cell, peeling or chipping by rubbing treatment is likely to take place, and such peeling or chipping tends to deteriorate the quality of the display.

Namely, as a liquid crystal alignment film of an in-plane switching system, a liquid crystal alignment film formed by a treating agent for liquid crystal alignment, has been desired which is not only capable of reducing a residual image or image persistence but also excellent in printability and rubbing resistance.

### DISCLOSURE OF THE INVENTION

As a result of an extensive study by the inventors on the above problems, the present invention is based on a discovery such that by using an agent for liquid crystal alignment having a specific structure, it is possible to obtain a liquid crystal alignment film which is excellent in printability and rubbing resistance and which, when a liquid crystal cell is prepared, has an excellent effect to prevent a residual image or image persistence.

Namely, the present invention provides a treating agent for liquid crystal alignment to be employed for a liquid crystal display device which has an electrode structure on one side of a substrate and which is to be driven by an in-plane electric field which is applied substantially in parallel with the substrate, said treating agent for liquid crystal alignment containing a polyamic acid which comprises both unit structures represented by the following formulae (I) and (II): 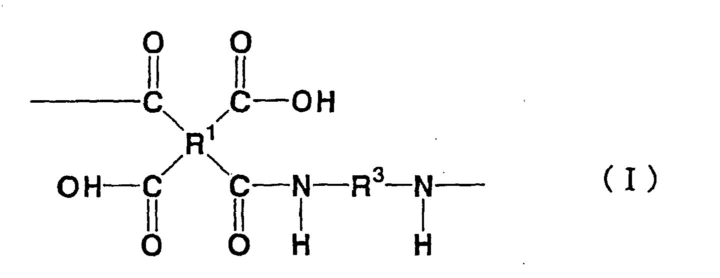 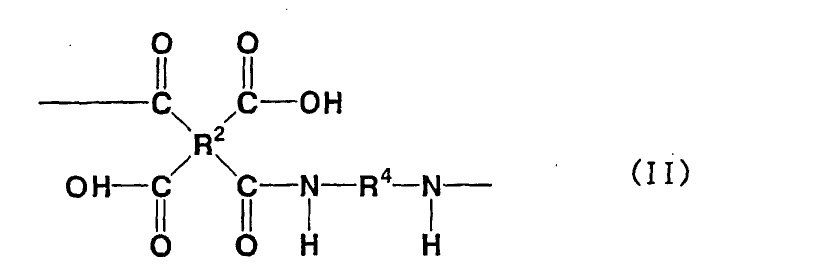 (R¹ is a tetravalent organic group constituting an aromatic tetracarboxylic acid, R² is a tetravalent organic group constituting an alicyclic tetracarboxylic acid, and each of R³ and R⁴ is a bivalent organic group constituting a diamine) and which has a reduced viscosity of from 0.05 to 5.0 dl/g (0.5 g/dl, in N-methylpyrrolidone at 30°C), or a polyimide obtained by dehydration/ring closure of said polyamic acid; a liquid crystal alignment film formed by coating such a treating agent for liquid crystal alignment on a substrate, followed by baking and then by rubbing treatment; and a liquid crystal display device employing such a liquid crystal alignment film.

### BRIEF DESCRIPTION OF THE DRAWING

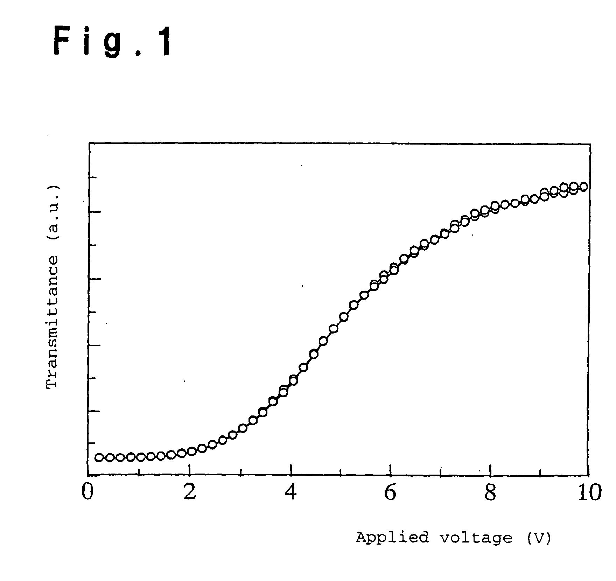

Fig. 1 is a graph showing voltage/transmittance characteristics before and after application of DC in Example 1.

### BEST MODE FOR CARRYING OUT THE INVENTION

Now, the present invention will be described in detail.

R¹ in the formula (I) is a tetravalent organic group constituting an aromatic tetracarboxylic acid, and such tetravalent organic groups may be used alone or in combination as a mixture of two or more of them. The tetracarboxylic acid having such a structure may, for example, be pyromellitic acid, 2,3,6,7-naphthalenetetracarboxylic acid, 1,2,5,6-naphthalenetetracarboxylic acid, 1,4,5,8-naphthalenetetracarboxylic acid, 2,3,6,7-anthracenetetracarboxylic acid, 1,2,5,6-anthracenetetracarboxylic acid, 3,3',4,4'-biphenyltetracarboxylic acid, 2,3,3',4-biphenyltetracarboxylic acid, bis(3,4-dicarboxyphenyl)ether, 3,3',4,4'-benzophenonetetracarboxylic acid, bis(3,4-dicarboxyphenyl)sulfone, bis(3,4-dicarboxyphenyl)methane, 2,2-bis(3,4-dicarboxyphenyl)propane, 1,1,1,3,3,3-hexafluoro-2,2'-bis(3,4-dicarboxyphenyl)propane, bis(3,4-dicarboxyphenyl)dimethylsilane, bis(3,4-dicarboxyphenyl)diphenylsilane, 2,3,4,5-pyridinetetracarboxylic acid or 2,6-bis(3,4-dicarboxyphenyl)pyridine. However, with a view to reducing the residual image characteristic, R¹ is preferably a tetravalent organic group selected from the following structures:

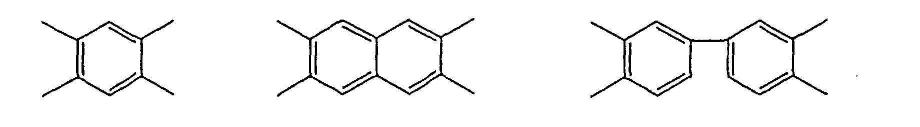

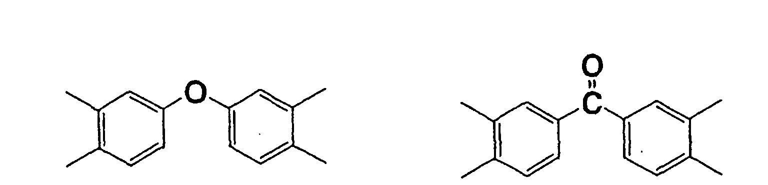

The tetracarboxylic acid having such a structure may, for example, be pyromellitic acid, 2,3,6,7-naphthalenetetracarboxylic acid, 3,3',4,4'-biphenyltetracarboxylic acid, 3,3',4,4'-benzophenonetetracarboxylic acid or bis(3,4-dicarboxyphenyl)methane. Particularly preferred is pyromellitic acid.

Whereas, R² in the formula (II) is a tetravalent organic group constituting an alicyclic tetracarboxylic acid, and such tetravalent organic groups may be used alone or in combination as a mixture of two or more of them. The tetracarboxylic acid having such a structure may, for example, be 1,2,3,4-cyclobutanetetracarboxylic acid, 1,2,3,4-cycloheptanetetracarboxylic acid, 2,3,4,5-tetrahydrofurantetracarboxylic acid, 1,2,4,5-cyclohexanetetracarboxylic acid, 3,4-dicarboxy-1-cyclohexyl succinic acid, 3,4-dicarboxy-1,2,3,4-tetrahydro-1-naphthalene succinic acid, bicyclo[3,3,0]octane-2,4,6,8-tetracarboxylic acid or 2,3,5-tricarboxycyclopentyl acetic acid. However, from the viewpoint of rubbing resistance, R² is preferably a tetravalent organic group selected from the following structures:

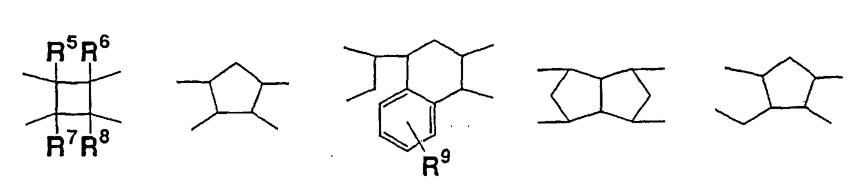

The tetracarboxylic acid having such a structure may, for example, be 1,2,3,4-cyclobutanetetracarboxylic acid, 1,2,3,4-cycloheptanetetracarboxylic acid, 3,4-dicarboxy-1,2,3,4-tetrahydro-1-naphthalene succinic acid, bicyclo[3,3,0]octane-2,4,6,8-tetracarboxylic acid or 2,3,5-tricarboxycyclopentyl acetic acid, or a derivative thereof. Particularly preferred is 1,2,3,4-cyclobutanetetracarboxylic acid.

The contents of the aromatic tetracarboxylic acid component and the alicyclic tetracarboxylic acid component used in the formula (I) and the formula (II), are such that based on the total mols of all polymers, the formula (I) is from 10 to 90 mol%, and the formula (II) is from 90 to 10 mol%, but from the viewpoint of the residual image characteristic and rubbing resistance, it is preferred that the formula (I) is from 20 to 80 mol%, and the formula (II) is from 80 to 20 mol%, and it is more preferred that the formula (I) is from 40 to 60 mol%, and the formula (II) is from 60 to 40 mol% (provided that the sum of the formula (I) and the formula (II) does not exceed 100 mol%).

Further, another tetracarboxylic acid may be used so long as the object of the present invention will not be impaired, and as a specific example, an aliphatic tetracarboxylic acid such as butanetetracarboxylic acid, may be mentioned.

R³ and R⁴ in the formula (I) and the formula (II) are bivalent organic groups constituting diamines, and they may be the same or different. Further, such bivalent organic groups may be used alone or in combination as a mixture of two or more of them. The diamine having such a structure may be an aromatic diamine such as p-phenylenediamine, m-phenylenediamine, 2,5-diaminotoluene, 2,6-diaminotoluene, 4,4'-diaminobiphenyl, 3,3'-dimethyl-4,4'-diaminobiphenyl, 3,3'-dimethoxy-4,4'-diaminobiphenyl, diaminobiphenylmethane, diaminobiphenyl ether, 2,2'-diaminodiphenylpropane or bis(3,5-diethyl-4-aminophenyl)methane. Among them, from the viewpoint of the residual image characteristic, each of R³ and R⁴ which are independent of each other, is preferably a bivalent organic group selected from the following structures:

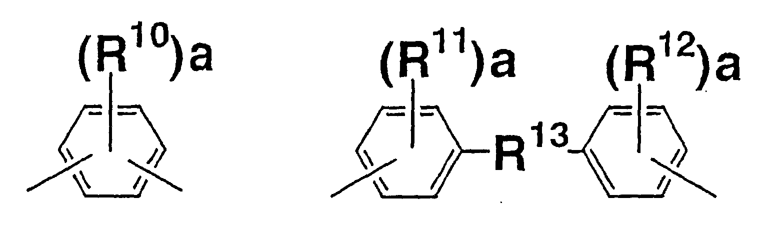

The diamine having such a structure may, for example, be p-phenylenediamine, 4,4'-diaminobiphenyl, diaminodiphenylmethane or diaminodiphenyl ether. Further, each of R³ and R⁴ which are independent of each other, is preferably a bivalent organic group selected from the following structures:

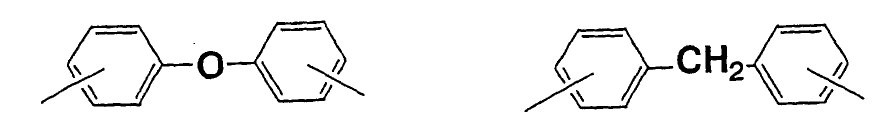

The diamine having such a structure may, for example, be 4,4'-diaminodiphenyl ether, 3,3'-diaminodiphenyl ether, 3,4'-diaminodiphenyl ether, 4,4'-diaminodiphenylmethane, 3,3'-diaminodiphenylmethane or 3,4'-diaminodiphenylmethane.

Further, other diamines may be used so long as the object of the present invention will not be impaired, and they may be used alone or in combination as a mixture of two or more of them. Specific examples thereof may be an aromatic diamine such as diaminodiphenylsulfone, diaminobenzophenone, diaminonaphthalene, 1,4-bis(4-aminophenoxy)benzene, 1,4-bis(4-aminophenyl)benzene, 9,10-bis(4-aminophenyl)anthracene, 1,3-bis(4-aminophenoxy)benzene, 4,4'-bis(4-aminophenoxy)diphenylsulfone, 2,2-bis[4-(4-aminophenoxy)phenyl]propane, 2,2-bis(4-aminophenyl)hexafluoropropane or 2,2-bis[4-(4-aminophenoxy)phenyl]hexafluoropropane, an alicyclic diamine such as bis(4-aminocyclohexyl)methane or bis(4-amino-3-methylcyclohexyl)methane, an aliphatic diamine such as 1,2-diaminoethane, 1,3-diaminopropane, 1,4-diaminobutane or 1,6-diaminohexane, and a diamine represented by the following formula: 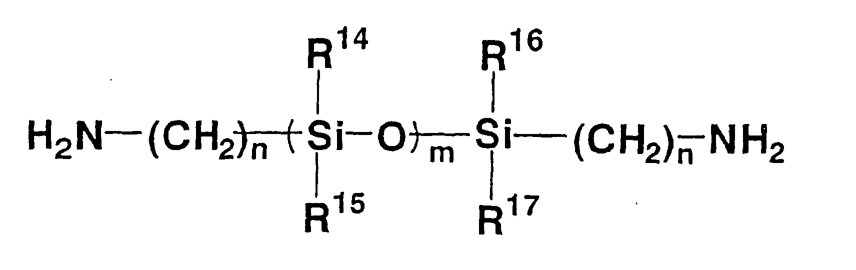 (each of n and m is an integer of from 1 to 10, and each of R¹⁴, R¹⁵, R¹⁶ and R¹⁷ is a methyl group or a phenyl group.)

The treating agent for alignment of the present invention is characterized in that it contains a polyamic acid having a specific structure or a polyimide obtained by partially or fully imidizing such a polyamic acid, but the method for its production is not particularly limited. Usually, a polyamic acid may be polymerized by reacting a tetracarboxylic dianhydride with a diamine in an organic polar solvent. In such a case, the molar ratio of the tetracarboxylic dianhydride to the diamine is preferably from 0.8 to 1.2. Like in a usual polycondensation reaction, as this molar ratio is close to 1, the polymerization degree of the resulting polymer tends to be large. If the polymerization degree is too small, the strength of the polyimide coating film tends to be inadequate, and if the polymerization degree is too large, the operation efficiency at the time of forming the polyimide coating film may sometimes be poor. Accordingly, the polymerization degree of the product in this reaction is preferably such that the reduced viscosity at the time of a polyamic acid is from 0.05 to 5.0 dl/g (at a concentration of 0.5 g/dl in N-methylpyrrolidone at a temperature of 30°C), particularly preferably from 0.2 to 2.0 dl/g.

Specific examples of the solvent to be used for the solution polymerization, include N-methyl-2-pyrrolidone, N,N-dimethylformamide, N,N-dimethylacetamide, N-methylcaprolactam, dimethylsulfoxide, tetramethylurea, pyridine, dimethylsulfone, hexamethylphosphoramide and butyrolactone, but particularly preferred is N-methyl-2-pyrrolidone. These solvents may be used alone or in combination as a mixture. Further, even a solvent incapable of dissolving a polyamic acid may be used in combination with the above solvent within a range where a uniform solution can be obtained. With respect to the reaction temperature for the solution polymerization, an optional temperature may be selected within a range of from -20°C to 150°C, preferably from -5°C to 100°C.

Further, to obtain a polyamic acid having the specific structure, at least two types of the tetracarboxylic dianhydride having a specific structure or the diamine may be used for copolymerization, or after polymerizing a polyamic acid having a specific structure, another polyamic acid having a specific structure may be polymerized, and they may be mixed for use. However, from the viewpoint of the residual image characteristic, copolymerization is preferred.

The obtained polyamic acid solution may be used as it is, as a treating agent for liquid crystal alignment. However, for the purpose of improving the printability of the treating agent for liquid crystal alignment, another solvent may be mixed thereto. As such a solvent, in addition to those described above as the solvent to be used for the solution polymerization, even a solvent which is incapable of dissolving the polymer by itself, may also be used within a range where the polymer will not precipitate. Specific examples thereof include ethyl cellosolve, butyl cellosolve, ethyl carbitol, butyl carbitol, ethyl carbitol acetate, ethylene glycol, 1-methoxy-2-propanol, 1-ethoxy-2-propanol, 1-butoxy-2-propanol, 1-phenoxy-2-propanol, propylene glycol monoacetate, propylene glycol diacetate, propylene glycol-1-monomethyl ether-2-acetate, propylene glycol-1-monoethyl ether-2-acetate, dipropylene glycol, 2-(2-ethoxypropoxy)propanol, methyl lactate, ethyl lactate, n-propyl lactate, n-butyl lactate and isoamyl lactate. Two or more solvents may be used in combination as a mixture. It is particularly preferred to contain butyl cellosolve. The concentration of such a solvent is preferably from 3 to 50 wt%, more preferably from 4 to 30 wt%, based on the weight of the entire polymer solution.

In a case where a polyamic acid is to be partially or fully imidized, the production method is not particularly limited. However, it is possible to imidize the polyamic acid formed by the reaction of a tetracarboxylic dianhydride with a diamine, as it is, in the solution. In such a case, in order to have a part or all of the polyamic acid converted to a polyimide, a method of heating for dehydration/ring closure, or a method of using a known dehydration/ring closure catalyst to carry out ring closure chemically, may be employed. In the method of heating, an optional temperature may be selected within a range of from 100°C to 300°C, preferably from 120°C to 250°C. In the method of carrying out ring closure chemically, pyridine or triethylamine may, for example, be used in the presence of acetic anhydride or the like. With respect to the temperature at that time, an optional temperature may be selected within a range of from -20°C to 200°C.

The solution having partially or fully converted to an imide, thus obtained, may be used as it is, or it may be precipitated in a poor solvent such as methanol or ethanol and isolated in the form of a powder, which may then be redissolved in a suitable solvent for use. The solvent to be used for redissolution is not particularly limited so long as it is capable of dissolving the obtained polymer. Specific examples thereof may be 2-pyrrolidone, N-methylpyrrolidone, N-ethylpyrrolidone, N-vinyl pyrrolidone, N,N-dimethylacetamide, N,N-dimethylformamide and γ-butyrolactone. From the viewpoint of the solubility, N-methylpyrrolidone or γ-butyrolactone is preferred, or a solvent obtained by mixing them, is further preferred. Further, even a solvent which is incapable of dissolving the polymer by itself, may be used in combination with the above solvent within a range where the polymer will not precipitate. Specific examples thereof include ethyl cellosolve, butyl cellosolve, ethyl carbitol, butyl carbitol, ethyl carbitol acetate, ethylene glycol, 1-methoxy-2-propanol, 1-ethoxy-2-propanol, 1-butoxy-2-propanol, 1-phenoxy-2-propanol, propylene glycol monoacetate, propylene glycol diacetate, propylene glycol-1-monomethyl ether-2-acetate, propylene glycol-1-monoethyl ether-2-acetate, dipropylene glycol, 2-(2-ethoxypropoxy)propanol, methyl lactate, ethyl lactate, n-propyl lactate, n-butyl lactate and isoamyl lactate. Two or more poor solvents may be used in combination, but it is particularly preferred to contain butyl cellosolve. The concentration of such a solvent is preferably from 3 to 50 wt%, more preferably from 4 to 30 wt%, based on the weight of the entire polymer solution.

The content of the polyamic acid or the polymer obtained by imidizing such a polyamic acid, in the treating agent for liquid crystal alignment of the present invention, thus obtained, is not particularly limited so long as it is a uniform solution, but it is usually from 1 to 15 wt%, preferably from 2 to 8 wt%, as solid content.

Further, for the purpose of further improving the adhesion of the above-described polymer resin film and the substrate, a functional silane-containing compound or an epoxy group-containing compound may be added as an additive to the obtained polymer solution. Specific examples thereof include 3-aminopropyltrimethoxysilane, 3-aminopropyltriethoxysilane, 2-aminopropyltrimethoxysilane, 2-aminopropyltriethoxysilane, N-(2-aminoethyl)-3-aminopropyltrimethoxysilane, N-(2-aminoethyl)-3-aminopropylmethyldimethoxysilane, 3-ureidopropyltrimethoxysilane, 3-ureidopropyltriethoxysilane, N-ethoxycarbonyl-3-aminopropyltrimethoxysilane, N-ethoxycarbonyl-3-aminopropyltriethoxysilane, N-triethoxysilylpropyltriethylenetriamine, N-trimethoxysilylpropyltriethylenetriamine, 10-trimethoxysilyl-1,4,7-triazadecane, 10-triethoxysilyl-1,4,7-triazadecane, 9-trimethoxysilyl-3,6-diazanonyl acetate, 9-triethoxysilyl-3,6-diazanonyl acetate, N-benzyl-3-aminopropyltrimethoxysilane, N-benzyl-3-aminopropyltriethoxysilane, N-phenyl-3-aminopropyltrimethoxysilane, N-phenyl-3-aminopropyltriethoxysilane, N-bis(oxyethylene)-3-aminopropyltrimethoxysilane, N-bis(oxyethylene)-3-aminopropyltriethoxysilane, ethylene glycol diglycidyl ether, polyethylene glycol diglycidyl ether, propylene glycol diglycidyl ether, tripropylene glycol diglycidyl ether, polypropylene glycol diglycidyl ether, neopentyl glycol diglycidyl ether, 1,6-hexanedioldiglycidyl ether, glycerol diglycidyl ether, 2,2-dibromoneopentyl glycol diglycidyl ether, 1,3,5,6-tetraglycidyl-2,4-hexanediol, N,N,N',N'-tetraglycidyl-m-xylenediamine, 1,3-bis(N,N-diglycidylaminomethyl)cyclohexane and N,N,N',N'-tetraglycidyl-4,4'-diaminodiphenylmethane. Such a functional silane-containing compound or an epoxy group-containing compound is preferably from 0.1 to 30 wt%, more preferably from 1 to 20 wt%, based on the weight of the entire polymer solution.

The treating agent for liquid crystal alignment of the present invention can be coated on a substrate such as a glass substrate provided with electrodes or a glass substrate provided with a color filter, usually by a method such as spin coating or printing. However, from the viewpoint of the productivity, a printing method is preferred. It is common that such printing is carried out usually at a temperature of from 20 to 30°C with a humidity of at most 60%. The coated treating agent for liquid crystal alignment is subjected to drying treatment by means of a hot plate or oven at a temperature of from 40 to 120°C and then baked by a hot plate, an oven or the like. As the baking temperature in such a case, an optional temperature may be selected within a range of from 120 to 350°C, and as the baking time, an optional time may be selected within a range of from 3 minutes to 180 minutes including the temperature rising and dropping steps. The baked coating film is subjected to rubbing treatment by means of a rubbing cloth of e.g. rayon or cotton, whereby a liquid crystal alignment film will be formed.

A liquid crystal cell of the present invention can be prepared by a usual method, and the preparation method is not particularly limited. Usually, a sealing agent is coated on glass substrates having a liquid crystal alignment film formed on at least one of the substrates, and two substrates are bonded via a spacer dispersed to maintain a constant gap, followed by curing the sealing agent. Liquid crystal is preliminarily injected through a liquid crystal inlet, whereupon the inlet is sealed to prepare a liquid crystal cell. As the liquid crystal, a common liquid crystal such as a fluorine type liquid crystal or a cyano type liquid crystal, may be employed. Particularly preferred is a liquid crystal having a large permittivity anisotropy and a low rotational viscosity.

Now, the present invention will be described in further detail with reference to Examples. But the present invention is by no means thereby restricted.

### Evaluation of printability

For evaluation of printability of an agent for liquid crystal alignment, an agent for liquid crystal alignment was coated on a chromium substrate by means of a simple printing machine manufactured by Nissha Printing Co., Ltd. and dried on a hot plate of 80°C for one minute, whereupon the surface of the coating film was observed by a microscope and evaluated.

### Evaluation of rubbing resistance

For evaluation of rubbing resistance of a liquid crystal alignment film, an agent for liquid crystal alignment was coated on an ITO substrate by a spin coating method, followed by drying and baking to form a coating film, which was subjected to rubbing, whereupon the surface state was observed by a microscope.

The rubbing was carried out by means of a rayon (YA-20R, manufactured by YOSHIKAWA CHEMICAL COMPANY, LIMITED) with a rubbing roller diameter of 120 mm, a roller rotational speed of 300 rpm and a substrate supplying speed of 10 mm/sec. at a pushing-in degree of 0.5 mm.

### Evaluation of residual image

On a substrate having comb electrodes having an electrode width of 20 µm and a distance between electrodes of 20 µm, an agent for liquid crystal alignment was printed, dried and baked to form a thin film having a thickness of 200 nm (substrate 1). In the same manner, on a glass substrate having no electrodes, the agent for liquid crystal alignment was printed, dried and baked to form a thin film having a thickness of 200 nm (substrate 2). With respect to the substrate 1, rubbing treatment was carried out so that the agent for liquid crystal alignment would have an angle of 45° to the electrode direction. Further, with respect to the substrate 2, rubbing treatment was carried out so that the rubbing direction would be in parallel with the substrate 1. These substrates were bonded via a spacer to prepare a cell having a gap of 6 µm. To this cell, liquid crystal ZLI-4792 (manufactured by Merck Ltd.) or MLC-2042 (manufactured by Merck Ltd.) was injected to prepare a liquid crystal cell. The voltage/transmittance (V/T) characteristic of this liquid crystal cell was measured by means of rectangular waves of 30 Hz, and then, a DC voltage of 10 V was applied for 30 minutes. Immediately after switching off the DC voltage, the V/T characteristic was measured again, and from the change in the voltage/transmittance characteristic as between before and after application of the DC voltage, the residual image was evaluated. Namely, when the transmittance at the time of application of a constant voltage is changed by a change in the V/T characteristic, it will be observed as a residual image at that region.

### EXAMPLE 1

20.0 g (0.10 mol) of 4,4'-diaminodiphenyl ether was dissolved in 150 g of N-methylpyrrolidone (hereinafter referred to as NMP). To this solution, 9.8 g (0.05 mol) of 1,2,3,4-cyclobutanetetracarboxylic dianhydride and 10.0 g (0.046 mol) of pyromellitic dianhydride were sequentially added at room temperature, and 75 g of NMP was further added to prepare a polyamic acid solution. The reduced viscosity of this polyamic acid was measured and found to be 1.10 dl/g (0.5 g/dl in a NMP solution at 30°C). This polyamic acid was diluted to 4 wt% by a mixed solvent of NMP and butyl cellosolve (weight ratio of 4:1), whereupon the printability was evaluated, whereby a uniform coating film having no irregularity in the thickness, was obtained. Further, on an ITO substrate, the solution for an alignment film was coated and baked at 80°C for 5 minutes and at 230°C for 60 minutes. Then, chipping off by rubbing was evaluated, whereby no chippings after rubbing were observed. Further, using comb electrodes, a liquid crystal cell was prepared, and the V/T characteristic was evaluated, whereby no change in the V/T characteristic was observed between before and after application of the DC voltage (Fig. 1), and no residual image was observed.

### EXAMPLE 2

A polyamic acid solution was prepared in the same manner as in Example 1 except that 4,4'-diaminodiphenyl ether was changed to 19.8 g (0.10 mol) of 4,4'-diaminodiphenylmethane. The reduced viscosity of this polyamic acid was measured and found to be 0.93 dl/g (0.5 g/dl in a NMP solution at 30°C). In the same manner as in Example 1, the printability, the rubbing resistance and the residual image were evaluated, whereby a uniform coating film was obtained, no chippings were observed at the time of rubbing, and no change was observed in the V/T characteristic.

### EXAMPLE 3

20.0 g (0.10 mol) of 4,4'-diaminodiphenyl ether was dissolved in 150 g of NMP. To this solution, 11.8 g (0.06 mol) of 1,2,3,4-cyclobutanetetracarboxylic dianhydride and 7.4 g (0.034 mol) of pyromellitic dianhydride were sequentially added at room temperature, and 72 g of NMP was further added to obtain a polyamic acid solution. The reduced viscosity of this polyamic acid was measured and found to be 1.00 dl/g (0.5 g/dl in a NMP solution at 30°C). In the same manner as in Example 1, the printability, the rubbing resistance and the residual image were evaluated, whereby a uniform coating film was obtained, no chippings were observed at the time of rubbing, and no change was observed in the V/T characteristic.

### EXAMPLE 4

20.0 g (0.10 mol) of 4,4'-diaminodiphenyl ether was dissolved in 150 g of NMP. To this solution, 7.8 g (0.04 mol) of 1,2,3,4-cyclobutanetetracarboxylic dianhydride and 11.8 g (0.054 mol) of pyromellitic dianhydride were sequentially added at room temperature, and 74 g of NMP was further added to obtain a polyamic acid solution. The reduced viscosity of this polyamic acid was measured and found to be 0.92 dl/g (0.5 g/dl in a NMP solution at 30°C). In the same manner as in Example 1, the printability, the rubbing resistance and the residual image were evaluated, whereby a uniform coating film was obtained, no chippings were observed at the time of rubbing, and no change was observed in the V/T characteristic.

### EXAMPLE 5

20.0 g (0.10 mol) of 4,4'-diaminodiphenyl ether was dissolved in 170 g of NMP. To this solution, 7.8 g (0.04 mol) of 1,2,3,4-cyclobutanetetracarboxylic dianhydride and 15.3 g (0.052 mol) of 3,3',4,4'-biphenyltetracarboxylic dianhydride were sequentially added at room temperature, and 75 g of NMP was further added to obtain a polyamic acid solution. The reduced viscosity of this polyamic acid was measured and found to be 0.98 dl/g (0.5 g/dl in a NMP solution at 30°C). In the same manner as in Example 1, the printability, the rubbing resistance and the residual image were evaluated, whereby a uniform coating film was obtained, no chippings were observed at the time of rubbing, and no change was observed in the V/T characteristic.

### COMPARATIVE EXAMPLE 1

20.0 g (0.10 mol) of 4,4'-diaminodiphenyl ether was dissolved in 150 g of NMP. To this solution, 20.5 g (0.094 mol) of pyromellitic dianhydride was added at room temperature, and 80 g of NMP was further added to obtain a polyamic acid solution. The reduced viscosity of this polyamic acid was measured and found to be 0.89 dl/g (0.5 g/dl in a NMP solution at 30°C). In the same manner as in Example 1, the printability, the rubbing resistance and the residual image were evaluated, whereby although a uniform coating film was obtained, a large amount of chippings were deposited by rubbing, and thus the rubbing resistance was found to be poor.

### INDUSTRIAL APPLICABILITY

When used as a liquid crystal alignment film for an in-plane switching liquid crystal display device, the treating agent for liquid crystal alignment of the present invention is excellent in the printability, receives little damage by rubbing and is excellent in prevention of the residual image or image persistence which are specific to the in-plane switching system, whereby a liquid crystal display device having a high display quality can be obtained.

## Claims

1. A treating agent for liquid crystal alignment to be employed for a liquid crystal display device which has an electrode structure on one side of a substrate and which is to be driven by an in-plane electric field which is applied substantially in parallel with the substrate, said treating agent for liquid crystal alignment containing a polyamic acid which comprises both unit structures represented by the following formulae (I) and (II): 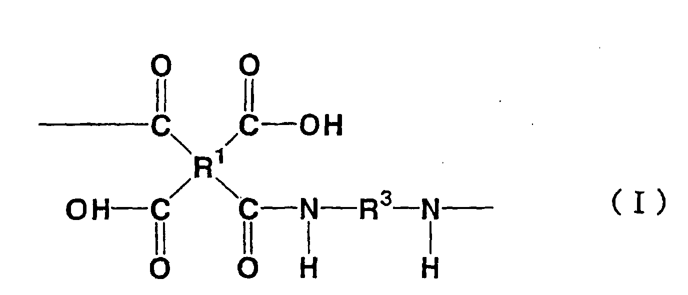 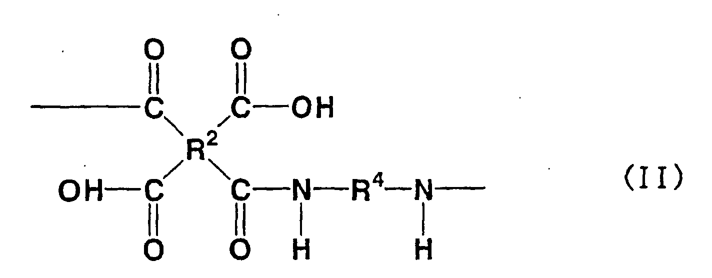 (R¹ is a tetravalent organic group constituting an aromatic tetracarboxylic acid, R² is a tetravalent organic group constituting an alicyclic tetracarboxylic acid, and each of R³ and R⁴ is a bivalent organic group constituting a diamine) and which has a reduced viscosity of from 0.05 to 5.0 dl/g (0.5 g/dl, in N-methylpyrrolidone at 30°C), or a polyimide obtained by dehydration/ring closure of said polyamic acid.

2. The treating agent for liquid crystal alignment according to Claim 1, which is obtained by mixing a polyamic acid which comprises the unit structure represented by the formula (I) or a polyimide obtained by dehydration/ring closure of said polyamic acid, with a polyamic acid which comprises the unit structure represented by the formula (II) or a polyimide obtained by dehydration/ring closure of said polyamic acid.

3. The treating agent for liquid crystal alignment according to Claim 1, which contains a polyamic acid having the unit structures represented by the formulae (I) and (II) in the same molecular chain, or a polyimide obtained by dehydration/ring closure of said polyamic acid.

4. The treating agent for liquid crystal alignment according to any one of Claims 1 to 3, wherein in the formula (I), R¹ is a tetravalent organic group selected from the following structures:

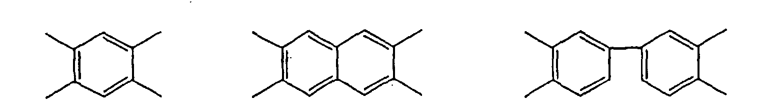

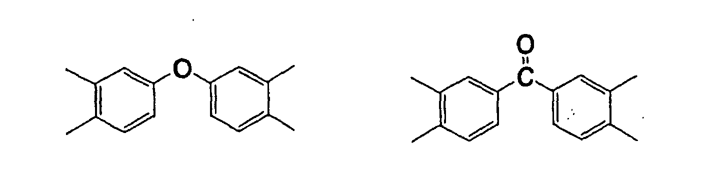

5. The treating agent for liquid crystal alignment according to any one of Claims 1 to 4, wherein in the formula (II), R² is selected from the following structures: 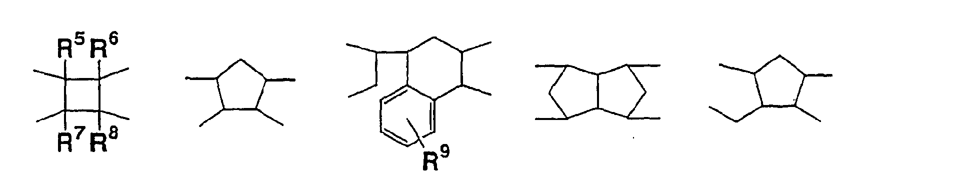 (R⁵, R⁶, R⁷, R⁸ and R⁹ each independently represents hydrogen or a methyl group.)

6. The treating agent for liquid crystal alignment according to any one of Claims 1 to 5, wherein the formula (I) is contained in an amount of from 10 to 90 mol%, and the formula (II) is contained in an amount of from 90 to 10 mol% (provided that the sum of the formula (I) and the formula (II) does not exceed 100 mol%).

7. The treating agent for liquid crystal alignment according to any one of Claims 1 to 6, wherein R³ and R⁴ in the formulae (I) and (II), each independently is a bivalent organic group selected from the following structures: 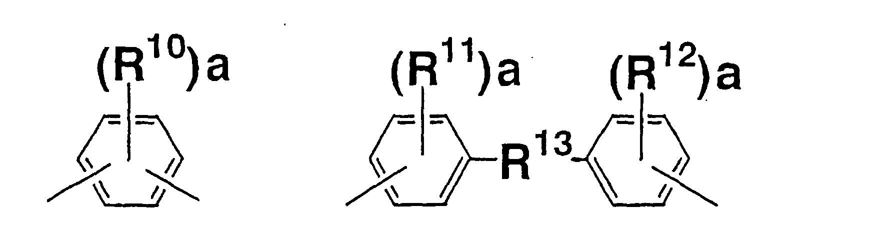 (R¹⁰, R¹¹ and R¹² each independently is selected from hydrogen, a methyl group, an ethyl group, a methoxy group and an ethoxy group, R¹³ is a single bond, an ether bond or a C₁₋₃ linear or branched alkylene group, and a is an integer of from 1 to 4).

8. The treating agent for liquid crystal alignment according to any one of Claims 1 to 7, wherein R¹ in the formula (I) is an organic group constituting a pyromellitic acid, and R² in the formula (II) is an organic group constituting a cyclobutane tetracarboxylic acid.

9. The treating agent for liquid crystal alignment according to any one of Claims 1 to 8, wherein R³ and R⁴ in the formulae (I) and (II), each independently is selected from the following structures:

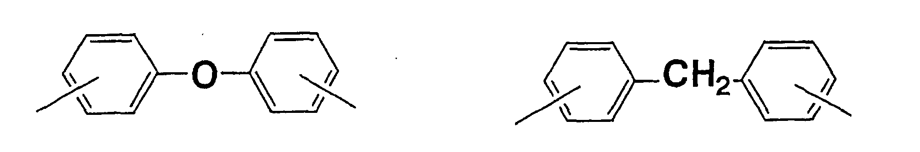

10. A liquid crystal alignment film for in-plane switching, formed by coating the treating agent for liquid crystal alignment as defined in any one of Claims 1 to 9, on a substrate, followed by baking and then by rubbing treatment.

11. An in-plane switching liquid crystal display device employing a liquid crystal alignment film formed by coating the treating agent for liquid crystal alignment as defined in any one of Claims 1 to 9, on a substrate, followed by baking and then by rubbing treatment.
